Europäisches Patentamt

(19) European Patent Office

Office européen des brevets

(11) EP 0 907 096 A2

(12) EUROPEAN PATENT APPLICATION

(43) Date of publication:
07.04.1999 Bulletin 1999/14

(51) Int. Cl.$^6$: G02F 1/1335

(21) Application number: 98117603.5

(22) Date of filing: 16.09.1998

(84) Designated Contracting States:
AT BE CH CY DE DK ES FI FR GB GR IE IT LI LU
MC NL PT SE
Designated Extension States:
AL LT LV MK RO SI

(30) Priority: 29.09.1997 JP 263530/97

(71) Applicant:
MATSUSHITA ELECTRIC INDUSTRIAL CO., LTD.
Kadoma-shi, Osaka-fu, 571 (JP)

(72) Inventors:
• Sekime, Tomoaki
Kanazawa-shi, Ishikawa, 921-8147 (JP)
• Iwai, Yoshio
Kanazawa-shi, Ishikawa 921-8161 (JP)
• Yamaguchi, Hisanori
Ishikawa-gun, Ishikawa 921-8815 (JP)
• Ogawa, Tetsu
Kanazawa-shi, Ishikawa, 921-8036 (JP)

(74) Representative:
Grünecker, Kinkeldey,
Stockmair & Schwanhäusser
Anwaltssozietät
Maximilianstrasse 58
80538 München (DE)

(54) Reflective color liquid crystal display

(57) In a reflective liquid crystal display device employing one polarization plate 11, the coloring of display in the halftone may be eliminated by making the chromaticity of reflected light, which varies in accordance with voltage applied on liquid crystal 17, as represented in terms of the Yxy color system satisfy the relationship, $x - y \leq 0$, and the values x, y are $0.23 \leq x \leq 0.35$ and $0.23 \leq y \leq 0.37$, respectively.

Fig. 1

**Description**

BACKGROUND OF THE INVENTION

The present invention relates to reflective type liquid crystal display devices (LCDs) for use in handy telephone and such other apparatus.

The rapid popularization of handy telephone, PHS (Personal Handyphone System), PDA (Personal Digital Assistant) and other information-communication apparatus has been helping create a new infrastructure, under which everybody can easily make access to or transmit information from any place at any time one wishes to do so. Because most of the apparatus for such operation are used in a mobile environment, display devices to be built in the apparatus are requested to be thin, light in weight and to have a low power-consuming property. Presently, LCDs are the most popularly used display means in the above described application field; among the LCDs, the reflective type LCDs which do not require the back lighting are the devices of main stream in the industry.

A conventional reflective color LCD is comprised basically of a liquid crystal cell having color filter and two polarization plates sandwitching the liquid crystal cell. The color filter is provided on one of the substrates of liquid crystal cell, and a transparent electrode is formed on top of the color filter. The color display is conducted by applying a voltage on the liquid crystal cell to change the molecular alignment of liquid crystal; the rate of light transmission is thus varied in each of the color filters and the display is made in colors. The rate of light transmission in each polarization plate, however, is approximately 45% at best; which means that the display screen is quite dark. In a display device where two polarization plates are used, for example, the light has to go through the polarization plate for four times before emerging on display.

In order to obtain a lighter display, there have been proposals of providing only one polarization plate alone on the upper substrate of the liquid crystal cell, viz. sandwitching the liquid crystal cell with one polarization plate and one reflective plate (the Japanese Patent Publication No.7-146469 and the Japanese Patent Publication No.7-84252). Because in the above proposals the light goes through the polarization plate for only two times, the transmission loss is considerably reduced and a lighter display is obtainable.

A conventional reflective LCD having only one polarization plate, however, has a drawback that, especially when color filter is used for the display in color, the halftone is affected by a coloring although the black/white display is achromatic. In particular, when there is a red color in the halftone the display is turned out to be a dull display of deteriorated color reproduction domain, or a color specified by the color filter is not completely reproduced.

SUMMARY OF THE INVENTION

The present invention offers a reflective LCD which makes an achromatic color display reproducing the colors in their intrinsic state.

An invented reflective LCD in its one mode comprises a first substrate having a reflective electrode, a second substrate having a transparent electrode which electrode is disposed to face the reflective electrode, a liquid crystal layer provided between the first substrate and the second substrate, a polarization plate provided near the second substrate, whose direction of absorption axis not being parallel to the parallel molecular axis of liquid crystal lodging in the proximity of the second substrate, and a phase difference plate provided between the second substrate and the polarization plate. In which, the chromaticity of reflected light, which varies in accordance with voltage applied on the liquid crystal layer, as represented in terms of the Yxy color system satisfies the relationship, $x - y \leq 0$, at the same time the values x, y are $0.23 \leq x \leq 0.35$ and $0.23 \leq y \leq 0.37$, respectively. Under the above described constitution, the chromaticity variation of reflected light may be suppressed small, and the chromaticity values x, y are locating in a domain of rather blue or white (achromatic); therefore, the reflective LCD presents a display of no coloring in the actual eye evaluation.

An invented reflective LCD in its another mode comprises a first substrate having a reflective electrode, a second substrate having a transparent electrode which electrode is disposed to face the reflective electrode, a liquid crystal layer provided between the first substrate and the second substrate, and a polarization plate provided near the second substrate. In which, the chromaticity of reflected light, which varies in accordance with voltage applied on the liquid crystal layer, as represented in terms of the Yxy color system satisfies the relationship, $x - y \leq 0$, at the same time the values x, y are locating in $0.23 \leq x \leq 0.35$ and $0.23 \leq y \leq 0.37$, respectively. Under the above described constitution, the chromaticity variation of reflected light may be suppressed small, and the chromaticity values x, y are locating in a domain of rather blue or white (achromatic), like the case of the earlier mode. Therefore, a display of the reflective LCD has no coloring in the actual eye evaluation.

In an invented reflective LCD, when reflection index of said reflected light is represented in terms of Y of the Yxy color system and the Y which varies in accordance with said voltage is equally divided into eight, Y1 - Y8, in the order Y1 being the smallest, it is preferred that the values x, y of said reflected light are within $0.23 \leq x \leq 0.32$ and $0.23$

≤ y ≤ 0.30, respectively, when said Y is at the region Y1, while the values x, y of said reflected light are within 0.28 ≤ x ≤ 0.35 and 0.28 ≤ y ≤ 0.37, respectively, when said Y is at the region Y8. Under the preferred state as described above, the display may be made achromatic when it is in black, white or similar to either of them.

In an invented reflective LCD, when reflection index of said reflected light is represented in terms of Y of the Yxy color system and the Y which varies in accordance with said voltage is equally divided into eight, Y1 - Y8, in the order Y1 being the smallest, it is preferred that the values x, y of said reflected light are within 0.25 ≤ x ≤ 0.34 and 0.26 ≤ y ≤ 0.35, respectively, when said Y is within the regions Y2 - Y7. Under the preferred state as described above, the display may be made achromatic when it is in the halftone.

Because the variation in chromaticity of reflected light is specified in an invented reflective LCD, it makes itself a reflective color LCD when a color filter is further comprised in said second substrate, which color LCD making a display in the intrinsic colors as designated by the color filter.

For securing a light display, the above described reflective LCD may be used basically in a structure in which the polarization plate is built only in said second substrate, with no polarization plate provided in said first substrate.

## BRIEF DESCRIPTION OF THE DRAWINGS

Fig. 1 is a cross sectional view showing a reflective LCD in accordance with a first exemplary embodiment of the present invention.
Fig. 2 is a plane view showing an example of the optical structure of the LCD of Fig. 1.
Fig. 3 is a chart used to describe an example of the chromaticity variation of reflected light in the reflective LCD of Fig. 1.
Fig. 4 is a cross sectional view showing a reflective LCD in accordance with a second exemplary embodiment of the present invention.
Fig. 5 is a plane view showing an example of the optical structure of the LCD of Fig. 2.
Fig. 6 is a chart used to describe an example of the chromaticity variation of reflected light in the reflective LCD of Fig. 2.

## DESCRIPTION OF THE PREFERRED EMBODIMENTS

(Embodiment 1)

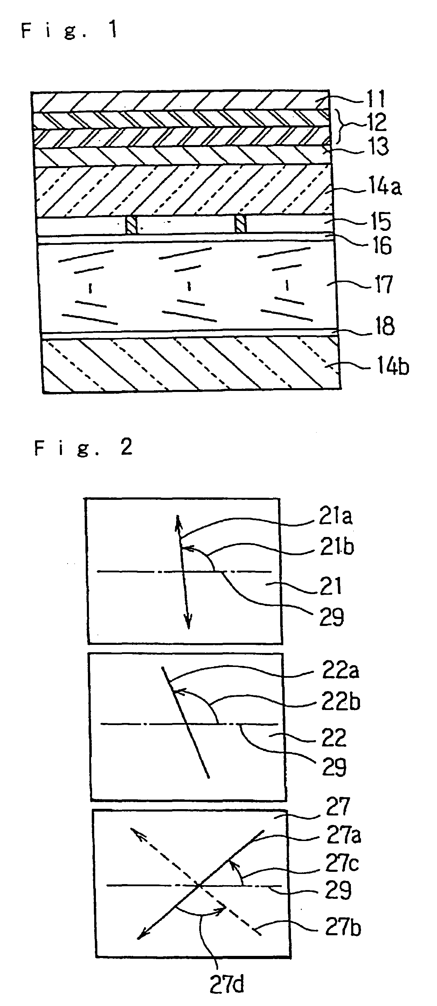

Shown in Fig. 1 include, a polarization plate 11 for polarizing ordinary rays in one direction, a phase difference plate 12 for varying the phase of polarized light, a diffuse plate 13 for diffusing the light, members 14 - 18 constituting a liquid crystal cell viz. an upper glass substrate 14a, an R G B color filter 15, a transparent electrode 16, a liquid crystal layer 17, a reflective electrode 18 and a lower glass substrate 14b.

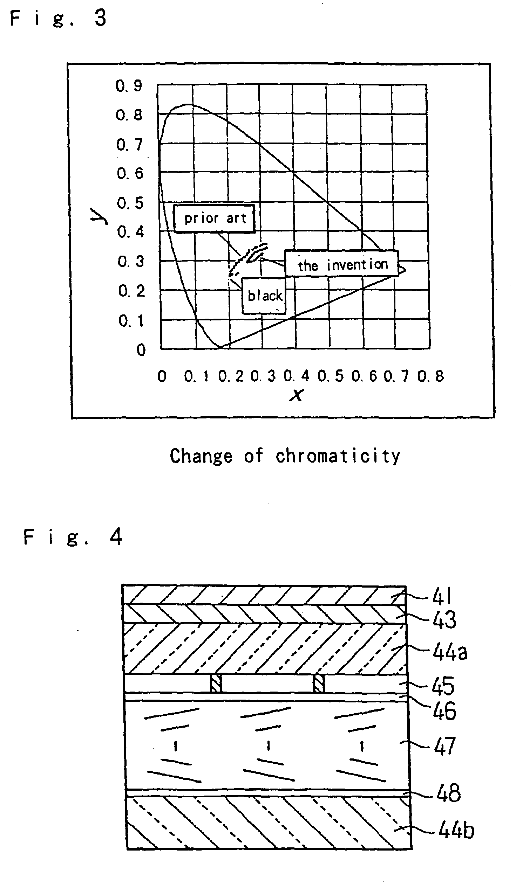

In Fig. 2, numeral 21 denotes a polarization plate for polarizing ordinary rays in one direction, 21a indicates a direction of absorption axis of the polarization plate, 21b is an angle formed by the direction 21a of absorption axis and a reference line 29, 22 denotes a phase difference plate for changing the phase of polarized light, 22a is a direction of phase lagged axis of the phase difference plate, 22b is an angle formed by the direction 22a of phase lagged axis and the reference line 29, 27 denotes a liquid crystal layer, 27a is a direction of rubbing axis of the upper glass substrate (direction in parallel with the parallel direction of liquid crystal molecule lodging in the proximity of the upper substrate), 27b is a direction of rubbing axis of the lower glass substrate, 27c is an angle formed by the direction 27a of rubbing axis of upper glass substrate and the reference line 29, and 27d is an angle of twist of the liquid crystal. The reference line 29 has been determined to a certain direction in the surface of substrate.

Fig. 3 is a chart used to describe the variation in chromaticity of reflected light represented in terms of the Yxy color system when voltage is applied on the liquid crystal layer of Fig. 2, whose structure is identical to that of Fig. 1 with the color filter 15 eliminated. The angle and retardation with respect to the polarization plate, the phase difference plate and the liquid crystal layer of Fig. 2 have been determined to the values as indicated in Table 1, and voltage is applied on for measuring change in the chromaticity of reflected fight; the results have been plotted in the Fig. 3. In Table 1, symbol Δn is birefringence index of each plate or layer, and symbol d is thickness of each plate or layer.

Table 1

| | Δn·d (nm) | Angle | |
|---|---|---|---|
| | | Size | Symbol in Fig. 2 |
| Polarization plate | 180 | 146.5° | 21b |
| Phase difference plate | 318 | 143.5° | 22b |
| Liquid crystal layer | 440 | 58.5° | 27c |
| | | 63.0° | 27d |
| Polarization plate | 180 | 141.5° | 21b |
| Phase difference plate | 510 | 150.5° | 22b |
| Liquid crystal layer | 440 | 58.5° | 27c |
| | | 63.0° | 27d |

In a conventional constitution where the variation in chromaticity of reflected light is not specified, the chromaticity at black display is x = 0.22, y = 0.25, as shown in Fig. 3, which is an indication in theory that it is close to blue. In the actual eye evaluation, the display was found out to be unsatisfactory as a black display, or it is unacceptable for the practical use. On the other hand, in an invented constitution where the variation in chromaticity of reflected light is specified, the chromaticity values x, y satisfied the relationship, $x - y \leq 0$, and each of the values was locating within the range, $0.23 \leq x \leq 0.35$, and $0.23 \leq y \leq 0.37$, respectively. The light used in the measurement was from a C-line source.

The reflection index Y, as represented in terms of the Yxy color system, when voltage is applied on the liquid crystal layer has been equally divided into eight in its variation of Y, in the order from low reflection index, Y1, Y2, Y3, Y4, Y5, Y6, Y7 and Y8. In practice, as the highest reflection index of an invented LCD was Y = 16%, against Y = 100% in a standard white surface, the division became $0\% \leq Y1 \leq 2\%$, $2\% \leq Y2 \leq 4\%$, $4\% \leq Y3 \leq 6\%$, $6\% \leq Y4 \leq 8\%$, $8\% \leq Y5 \leq 10\%$, $10\% \leq Y6 \leq 12\%$, $12\% \leq Y7 \leq 14\%$, and $14\% \leq Y8 \leq 16\%$.

In this measurement, the values x, y of the Yxy color system respectively satisfied the requirements, $0.23 \leq x \leq 0.32$ and $0.23 \leq y \leq 0.30$ when the reflection index Y is at the range Y1, and, $0.28 \leq x \leq 0.35$ and $0.28 \leq y \leq 0.37$ when the reflection index Y is at the range Y8. The reflected light has been achromatic in the black and white state.

When the reflection index Y is within the range $Y2 \leq Y \leq Y7$, the values x, y respectively satisfied the requirements $025 \leq x \leq 0.34$ and $0.26 \leq y \leq 0.35$, and the reflected light has been achromatic also in the halftone.

In the constitution of. Fig. 1, it is preferred that the Δn·d is approximately 200 - 1500. Further, the angle formed by the absorption axis of polarization plate or the lagged axis of phase difference plate with respect to the reference line should preferably be determined in accordance with the value Δn·d, within a range 0° - 180°.

As described in the above, the change of chromaticity x, y in the present embodiment is small and remains within an achromatic range; in the actual eye evaluation, the reflective LCD made a display without coloring. When a color filter is further provided in the reflective LCD for the display in color, it made a display in intrinsic colors designated by the color filter.

Although the twist angle has been set at 63degrees in the present exemplary embodiment, the effects of invention are not limited by the angle; same effects are also obtainable in a TN (twisted nematic) LCD whose twist angle ranges from 0degree to 90degrees, as well as in a STN (super twisted nematic) LCD whose twist angle ranges from 180 degrees to 270 degrees.

(Embodiment 2)

Shown in Fig. 4 include, a polarization plate 41 for polarizing ordinary rays in one direction, a diffuse plate 43 for diffusing the light, members 44 - 48 constituting a liquid crystal cell viz. an upper glass substrate 44a, an RGB color filter 45, a transparent electrode 46, a liquid crystal layer 47, a reflective electrode 48 and a lower glass substrate 44b.

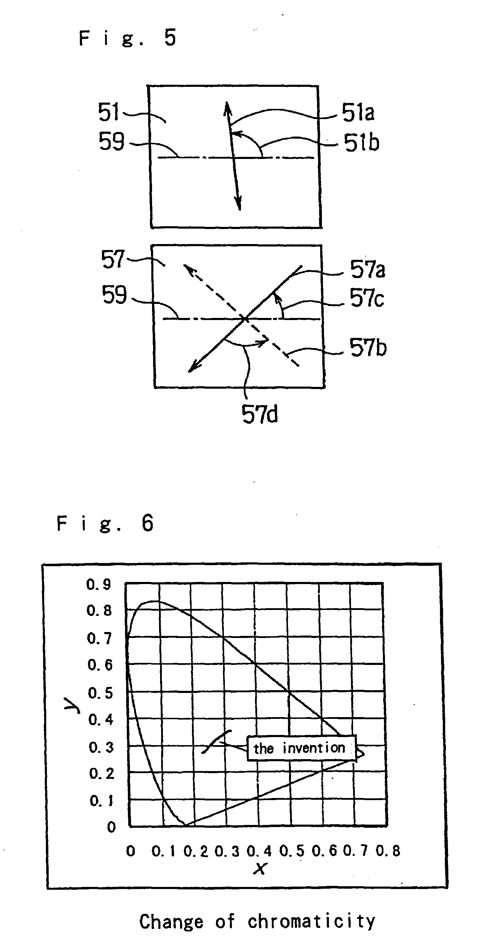

In Fig. 5, numeral 51 denotes a polarization plate for polarizing ordinary rays in one direction, 51a indicates a direction of absorption axis of the polarization plate, 51b is an angle formed by the direction 51a of absorption axis and a reference line 59, 57 denotes a liquid crystal layer, 57a is a direction of rubbing axis of the upper glass substrate (direction in parallel with the parallel direction of liquid crystal molecule lodging in the proximity of the upper substrate), 57b is a direction of rubbing axis of the lower glass substrate, 57c is an angle formed by the direction 57a of rubbing axis of upper glass substrate and the reference line 59, and 57d is an angle of twist of the liquid crystal. The reference line 59 has been determined to a certain direction in the surface of substrate.

Fig. 6 is a chart used to describe the variation in chromaticity of reflected light when voltage is applied on the liquid crystal layer of Fig. 4, with its color filter 45 eliminated. The angle and retardation with respect to the polarization plate and the liquid crystal layer of Fig. 5 have been set to the values as indicated in Table 2, and voltage is applied on for measuring the change in chromaticity of reflected light; the results have been plotted in the Fig. 6. In Table 2, symbol $\Delta n$ is birefringence index of each plate or layer, and symbol d is thickness of each plate or layer.

Table 2

| | $\Delta n \cdot d$ (nm) | Angle | |
| --- | --- | --- | --- |
| | | Size | Symbol in Fig. 5 |
| Polarization plate | 180 | 58.5° | 51b |
| Liquid crystal layer | 430 | 58.5° | 57c |
| | | 63.0° | 57d |

In an invented constitution where the change in chromaticity of reflected light is specified, the chromaticity values x and y satisfied the relationship, $x - y \leq 0$, and each of the values stayed within the range, $0.23 \leq x \leq 0.35$, $0.23 \leq y \leq 0.37$, respectively. The light used in the measurement was from a C-line source.

The reflection index Y, as represented in terms of the Yxy color system, when voltage is applied on the liquid crystal layer has been equally divided into eight in its variation of Y, in the order from low reflection index, Y1, Y2, Y3, Y4, Y5, Y6, Y7 and Y8. In practice, as the highest reflection index of an invented LCD was Y = 16%, against Y = 100% in a standard white surface, the division became $0\% \leq Y1 \leq 2\%$, $2\% \leq Y2 \leq 4\%$, $4\% \leq Y3 \leq 6\%$, $6\% \leq Y4 \leq 8\%$, $8\% \leq Y5 \leq 10\%$, $10\% \leq Y6 \leq 12\%$, $12\% \leq Y7 \leq 14\%$, and $14\% \leq Y8 \leq 16\%$.

In this measurement, the values x, y of the Yxy color system satisfied the requirements, $0.23 \leq x \leq 0.32$ and $0.23 \leq y \leq 0.30$, respectively, when the reflection index Y is at the range Y1, and, $0.28 \leq x \leq 0.35$ and $0.28 \leq y \leq 0.37$, respectively, when the reflection index Y is at the range Y8. The reflected light has been achromatic in the black and white state.

When the reflection index Y is within the range $Y2 \leq Y \leq Y7$, the values x, y satisfied the requirements, $0.25 \leq x \leq 0.34$ and $0.26 \leq y \leq 0.35$, respectively, and the reflected light has been achromatic also in the halftone.

In the constitution of Fig. 4, it is preferred that the $\Delta n \cdot d$ is approximately 200 - 1500. Further, the angle formed by the absorption axis of polarization plate or the lagged axis of phase difference plate with respect to the reference line should preferably be determined in accordance with the value $\Delta n \cdot d$, within a range 0° - 180° .

As described in the above, the change of chromaticity x, y is small and remains within an achromatic range; in the actual eye evaluation, the reflective LCD made a display without coloring. When a color filter is further provided in the reflective LCD for the display in color, it made a display in intrinsic colors designated by the color filter.

Although the twist angle has been set at 63degrees in the present exemplary embodiment, the effects of invention are not limited by the angle; same effects are also obtainable in a TN (twisted nematic) LCD whose twist angle ranges from 0 degree to 90 degrees, as well as in a STN (super twisted nematic) LCD whose twist angle ranges from 180 degrees to 270 degrees.

## Claims

1. A reflective liquid crystal display device comprising:

   a first substrate having a reflective electrode;
   a second substrate having a transparent electrode, said transparent electrode being disposed to face said reflective electrode;
   a liquid crystal layer provided between said first substrate and said second substrate;
   a polarization plate provided in said second substrate side, the direction of whose absorption axis not being in parallel with the molecular parallel axis of liquid crystal lodging in the proximity of said second substrate; and
   a phase difference plate provided between said second substrate and said polarization plate,
      wherein the chromaticity of reflected light, which varies in accordance with voltage applied on said liquid crystal layer, as represented in terms of the Yxy color system satisfies the relationship, $x - y \leq 0$, and the values x, y are $0.23 \leq x \leq 0.35$, $0.23 \leq y \leq 0.37$ respectively.

2. A reflective liquid crystal display device comprising:

   a first substrate having a reflective electrode;
   a second substrate having a transparent electrode, said transparent electrode being disposed to face said reflective electrode;
   a liquid crystal layer provided between said first substrate and said second substrate; and
   a polarization plate provided in said second substrate side,
        wherein the chromaticity of reflected light, which varies in accordance with voltage applied on said liquid crystal layer, as represented in terms of the Yxy color system satisfies the relationship, $x - y \leq 0$, and the values x, y are $0.23 \leq x \leq 035$, $0.23 \leq y \leq 0\ 37$, respectively.

3. The reflective liquid crystal display device of claim 1 or 2, wherein when reflection index of said reflected light is represented with Y in terms of the Yxy color system, and the reflection index Y which varies in accordance with said voltage is equally divided into eight, in the order from low reflection index, Y1, Y2, Y3, Y4, Y5, Y6, Y7 and Y8, said values x, y are $0.23 \leq x \leq 0.32$ and $0.23 \leq y \leq 0.30$, respectively, when said reflection index Y is at Y1, while the values are $0.28 \leq x \leq 0.35$ and $0.28 \leq y \leq 0.37$, respectively, when the reflection index Y is at Y8.

4. The reflective liquid crystal display device of claim 1 or 2, wherein when reflection index of said reflected light is represented with Y in terms of the Yxy color system, and the reflection index Y which varies in accordance with said voltage is equally divided into eight, in the order from low reflection index, Y1, Y2, Y3, Y4, Y5, Y6, Y7 and Y8, said values x, y are $0.25 \leq x \leq 0.34$ and $0.26 \leq y \leq 0.35$ when said reflection index Y is at either one among the Y2 - Y7.

5. The reflective liquid crystal display device of claim 3, wherein said values x, y are $0.25 \leq x \leq 0.34$ and $0.26 \leq y \leq 0.35$, respectively, when said reflection index Y is at either one among the Y2 - Y7.

6. The reflective liquid crystal display device of claim 1 or 2, further comprising a color filter in said second substrate side.

7. The reflective liquid crystal display device of claim 3, further comprising a color filter in said second substrate side.

8. The reflective liquid crystal display device of claim 4, further comprising a color filter in said second substrate side.

9. The reflective liquid crystal display device of claim 5, further comprising a color filter in said second substrate side.

Fig. 1

Fig. 2

F i g . 3

Change of chromaticity

F i g . 4

Fig. 5

Fig. 6

Change of chromaticity